# EUROPEAN PATENT APPLICATION

(11) **EP 3 388 632 A1**
(43) Date of publication of application: **17.10.2018**
(21) Application number: 18173342.9
(22) Date of filing: 13.02.2013
(51) Int. Cl.: F01D 5/18, F01D 9/06, F23R 3/00, F23R 3/06

(54) **COMPONENT FOR A GAS TURBINE ENGINE AND CORRESPONDING TURBOFAN ENGINE**

(30) Priority: 15.02.2012 US 201261599354 P; 09.07.2012 US 201213544184
(62) Divisional of application: 13784655.6
(71) Applicant: United Technologies Corporation, Farmington, CT 06032 (US)
(72) Inventor: XU, JinQuan, Groton, CT Connecticut 06340 (US)
(74) Representative: Dehns

(57) **Abstract**

A component for a gas turbine engine includes a wall and a cooling hole. The wall has a first surface and a second surface. The second surface is exposed to hot gas flow. The cooling hole extends through the wall. The cooling hole includes a metering section extending from an inlet in the first surface of the wall to a transition, a diffusing section extending from the transition to an outlet in the second surface of the wall, a cusp extending from the transition along the metering section of the cooling hole toward the inlet.

## Description

### BACKGROUND

This invention relates generally to turbomachinery, and specifically to turbine flow path components for gas turbine engines. In particular, the invention relates to cooling techniques for airfoils and other gas turbine engine components exposed to hot working fluid flow, including, but not limited to, rotor blades and stator vane airfoils, endwall surfaces including platforms, shrouds and compressor and turbine casings, combustor liners, turbine exhaust assemblies, thrust augmentors and exhaust nozzles.

Gas turbine engines are rotary-type combustion turbine engines built around a power core made up of a compressor, combustor and turbine, arranged in flow series with an upstream inlet and downstream exhaust. The compressor section compresses air from the inlet, which is mixed with fuel in the combustor and ignited to generate hot combustion gas. The turbine section extracts energy from the expanding combustion gas, and drives the compressor section via a common shaft. Expanded combustion products are exhausted downstream, and energy is delivered in the form of rotational energy in the shaft, reactive thrust from the exhaust, or both.

Gas turbine engines provide efficient, reliable power for a wide range of applications in aviation, transportation and industrial power generation. Small-scale gas turbine engines typically utilize a one-spool design, with co-rotating compressor and turbine sections. Larger-scale combustion turbines including jet engines and industrial gas turbines (IGTs) are generally arranged into a number of coaxially nested spools. The spools operate at different pressures, temperatures and spool speeds, and may rotate in different directions.

Individual compressor and turbine sections in each spool may also be subdivided into a number of stages, formed of alternating rows of rotor blade and stator vane
airfoils. The airfoils are shaped to turn, accelerate and compress the working fluid flow, or to generate lift for conversion to rotational energy in the turbine.

Industrial gas turbines often utilize complex nested spool configurations, and deliver power via an output shaft coupled to an electrical generator or other load, typically using an external gearbox. In combined cycle gas turbines (CCGTs), a steam turbine or other secondary system is used to extract additional energy from the exhaust, improving thermodynamic efficiency. Gas turbine engines are also used in marine and land-based applications, including naval vessels, trains and armored vehicles, and in smaller-scale applications such as auxiliary power units.

Aviation applications include turbojet, turbofan, turboprop and turboshaft engine designs. In turbojet engines, thrust is generated primarily from the exhaust. Modern fixed-wing aircraft generally employ turbofan and turboprop configurations, in which the low pressure spool is coupled to a propulsion fan or propeller. Turboshaft engines are employed on rotary-wing aircraft, including helicopters, typically using a reduction gearbox to control blade speed. Unducted (open rotor) turbofans and ducted propeller engines also known, in a variety of single-rotor and contra-rotating designs with both forward and aft mounting configurations.

Aviation turbines generally utilize two and three-spool configurations, with a corresponding number of coaxially rotating turbine and compressor sections. In two-spool designs, the high pressure turbine drives a high pressure compressor, forming the high pressure spool or high spool. The low-pressure turbine drives the low spool and fan section, or a shaft for a rotor or propeller. In three-spool engines, there is also an intermediate pressure spool. Aviation turbines are also used to power auxiliary devices including electrical generators, hydraulic pumps and elements of the environmental control system, for example using bleed air from the compressor or via an accessory gearbox.

Additional turbine engine applications and turbine engine types include intercooled, regenerated or recuperated and variable cycle gas turbine engines, and combinations thereof. In particular, these applications include intercooled turbine engines, for example with a relatively higher pressure ratio, regenerated or recuperated gas turbine engines, for example with a relatively lower pressure ratio or for smaller-scale applications, and variable cycle gas turbine engines, for example for operation under a range of flight conditions including subsonic, transonic and supersonic speeds. Combined intercooled and regenerated/recuperated engines are also known, in a variety of spool configurations with traditional and variable cycle modes of operation.

Turbofan engines are commonly divided into high and low bypass configurations. High bypass turbofans generate thrust primarily from the fan, which accelerates airflow through a bypass duct oriented around the engine core. This design is common on commercial aircraft and transports, where noise and fuel efficiency are primary concerns. The fan rotor may also operate as a first stage compressor, or as a pre-compressor stage for the low-pressure compressor or booster module. Variable-area nozzle surfaces can also be deployed to regulate the bypass pressure and improve fan performance, for example during takeoff and landing. Advanced turbofan engines may also utilize a geared fan drive mechanism to provide greater speed control, reducing noise and increasing engine efficiency, or to increase or decrease specific thrust.

Low bypass turbofans produce proportionally more thrust from the exhaust flow, generating greater specific thrust for use in high-performance applications including supersonic jet aircraft. Low bypass turbofan engines may also include variable-area exhaust nozzles and afterburner or augmentor assemblies for flow regulation and short-term thrust enhancement. Specialized highspeed applications include continuously afterburning engines and hybrid turbojet/ramjet configurations.

Across these applications, turbine performance depends on the balance between higher pressure ratios and core gas path temperatures, which tend to increase efficiency, and the related effects on service life and reliability due to increased stress and wear. This balance is particularly relevant to gas turbine engine components in the hot sections of the compressor, combustor, turbine and exhaust sections, where active cooling is required to prevent damage due to high gas path temperatures and pressures.

### SUMMARY

This invention concerns a gas turbine engine component with a cooling hole. The wall has a first surface and a second surface. The second surface is exposed to hot gas flow. The cooling hole extends through the wall. The cooling hole includes a metering section extending from an inlet in the first surface of the wall to a transition, a diffusing section extending from the transition to an outlet in the second surface of the wall, a cusp on the transition, and a first longitudinal ridge extending along the diffusing section between the transition and the outlet. The first longitudinal ridge divides the diffusing section into first and second lobes.

Another embodiment of the present invention is a gas turbine engine component that includes a flow path wall having a first surface and a second surface that is exposed to working fluid flow. An inlet is formed in the first surface of the flow path wall. A metering section extends from the inlet to a transition. A diffusing section extends from the transition to an outlet in the second surface. A cusp is formed on the transition. A longitudinal ridge extends along the diffusing section from the transition toward the outlet. The longitudinal ridge separates the diffusing section into first and second lobes.

### BRIEF DESCRIPTION OF THE DRAWINGS

FIG. 1 is a cross-sectional view of a gas turbine engine.
FIG. 2A is a perspective view of an airfoil for the gas turbine engine, in a rotor blade configuration.
FIG. 2B is a perspective view of an airfoil for the gas turbine engine, in a stator vane configuration.
FIG. 3A is a cross-sectional view of the gas path wall for a cooled gas turbine engine component, taken in a longitudinal direction.
FIG. 3B is an alternate cross-sectional view of the gas path wall, showing the cooling hole in a lobed outlet configuration.
FIG. 3C is a cross-sectional view of the gas path wall, taken in a transverse direction.
FIG. 4A is a schematic view of the gas path wall, illustrating a cusped inlet geometry for the cooling hole.
FIG. 4B is a schematic view of the gas path wall, illustrating an alternate cusped inlet geometry for the cooling hole.
FIG. 5A is a schematic view of the gas path wall, illustrating a two-lobe cooling hole geometry.
FIG. 5B is a schematic view of the gas path wall, illustrating a three-lobe cooling hole geometry.
FIG. 6 is a schematic view of the gas path wall, illustrating a buried ridge geometry.
FIG. 7 is a block diagram illustrating a method for forming a cooling hole in a gas turbine engine component.

### DETAILED DESCRIPTION

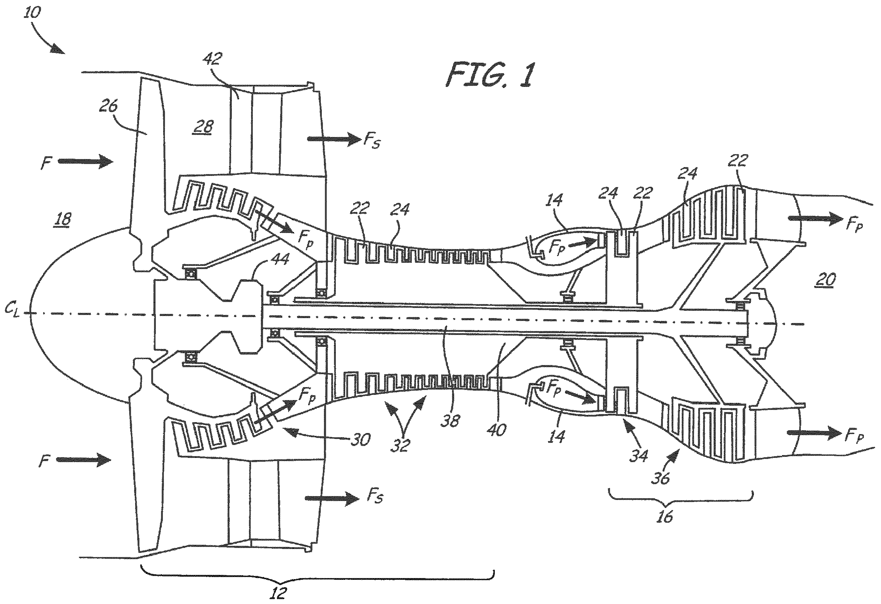

FIG. 1 is a cross-sectional view of gas turbine engine 10. Gas turbine engine (or turbine engine) 10 includes a power core with compressor section 12, combustor 14 and turbine section 16 arranged in flow series between upstream inlet 18 and downstream exhaust 20. Compressor section 12 and turbine section 16 are arranged into a number of alternating stages of rotor airfoils (or blades) 22 and stator airfoils (or vanes) 24.

In the turbofan configuration of FIG. 1, propulsion fan 26 is positioned in bypass duct 28, which is coaxially oriented about the engine core along centerline (or turbine axis) C_{L}. An open-rotor propulsion stage 26 may also provided, with turbine engine 10 operating as a turboprop or unducted turbofan engine. Alternatively, fan rotor 26 and bypass duct 28 may be absent, with turbine engine 10 configured as a turbojet or turboshaft engine, or an industrial gas turbine.

For improved service life and reliability, components of gas turbine engine 10 are provided with an improved cooling configuration, as described below. Suitable components for the cooling configuration include rotor airfoils 22, stator airfoils 24 and other gas turbine engine components exposed to hot gas flow, including, but not limited to, platforms, shrouds, casings and other endwall surfaces in hot sections of compressor 12 and turbine 16, and liners, nozzles, afterburners, augmentors and other gas wall components in combustor 14 and exhaust section 20.

In the two-spool, high bypass configuration of FIG. 1, compressor section 12 includes low pressure compressor (LPC) 30 and high pressure compressor (HPC) 32, and turbine section 16 includes high pressure turbine (HPT) 34 and low pressure turbine (LPT) 36. Low pressure compressor 30 is rotationally coupled to low pressure turbine 36 via low pressure (LP) shaft 38, forming the LP spool or low spool. High pressure compressor 32 is rotationally coupled to high pressure turbine 34 via high pressure (HP) shaft 40, forming the HP spool or high spool.

Flow F at inlet 18 divides into primary (core) flow Fp and secondary (bypass) flow F_{S} downstream of fan rotor 26. Fan rotor 26 accelerates secondary flow F_{S} through bypass duct 28, with fan exit guide vanes (FEGVs) 42 to reduce swirl and improve thrust performance. In some designs, structural guide vanes (SGVs) 42 are used, providing combined flow turning and load bearing capabilities.

Primary flow F_{P} is compressed in low pressure compressor 30 and high pressure compressor 32, then mixed with fuel in combustor 14 and ignited to generate hot combustion gas. The combustion gas expands to provide rotational energy in high pressure turbine 34 and low pressure turbine 36, driving high pressure compressor 32 and low pressure compressor 30, respectively. Expanded combustion gases exit through exhaust section (or exhaust nozzle) 20, which can be shaped or actuated to regulate the exhaust flow and improve thrust performance.

Low pressure shaft 38 and high pressure shaft 40 are mounted coaxially about centerline C_{L}, and rotate at different speeds. Fan rotor (or other propulsion stage) 26 is rotationally coupled to low pressure shaft 38. In advanced designs, fan drive gear system 44 is provided for additional fan speed control, improving thrust performance and efficiency with reduced noise output.

Fan rotor 26 may also function as a first-stage compressor for gas turbine engine 10, and LPC 30 may be configured as an intermediate compressor or booster. Alternatively, propulsion stage 26 has an open rotor design, or is absent, as described above. Gas turbine engine 10 thus encompasses a wide range of different shaft, spool and turbine engine configurations, including one, two and three-spool turboprop and (high or low bypass) turbofan engines, turboshaft engines, turbojet engines, and multi-spool industrial gas turbines.

In each of these applications, turbine efficiency and performance depend on the overall pressure ratio, defined by the total pressure at inlet 18 as compared to the exit pressure of compressor section 12, for example at the outlet of high pressure compressor 32, entering combustor 14. Higher pressure ratios, however, also result in greater gas path temperatures, increasing the cooling loads on rotor airfoils 22, stator airfoils 24 and other components of gas turbine engine 10. To reduce operating temperatures, increase service life and maintain engine efficiency, these components are provided with improved cooling configurations, as described below. Suitable components include, but are not limited to, cooled gas turbine engine components in compressor sections 30 and 32, combustor 14, turbine sections 34 and 36, and exhaust section 20 of gas turbine engine 10.

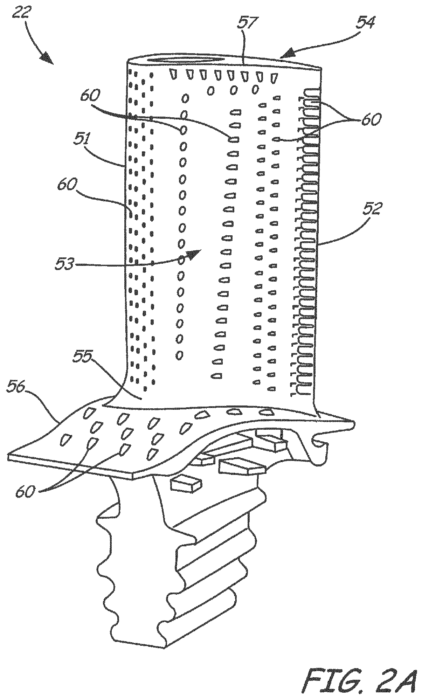

FIG. 2A is a perspective view of rotor airfoil (or blade) 22 for gas turbine engine 10, as shown in FIG. 1, or for another turbomachine. Rotor airfoil 22 extends axially from leading edge 51 to trailing edge 52, defining pressure surface 53 (front) and suction surface 54 (back) therebetween.

Pressure and suction surfaces 53 and 54 form the major opposing surfaces or walls of airfoil 22, extending axially between leading edge 51 and trailing edge 52, and radially from root section 55, adjacent inner diameter (ID) platform 56, to tip section 57, opposite ID platform 56. In some designs, tip section 57 is shrouded.

Cooling holes or outlets 60 are provided on one or more surfaces of airfoil 22, for example along leading edge 51, trailing edge 52, pressure (or concave) surface 53, or suction (or convex) surface 54, or a combination thereof. Cooling holes or passages 60 may also be provided on the endwall surfaces of airfoil 22, for example along ID platform 56, or on a shroud or engine casing adjacent tip section 57.

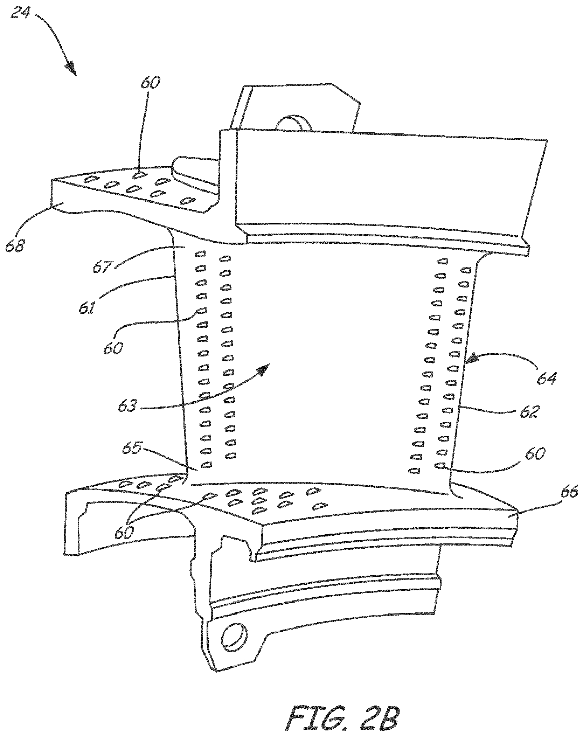

FIG. 2B is a perspective view of stator airfoil (or vane) 24 for gas turbine engine 10, as shown in FIG. 1, or for another turbomachine. Stator airfoil 24 extends axially from leading edge 61 to trailing edge 62, defining pressure surface 63 (front) and suction surface 64 (back) therebetween. Pressure and suction surfaces 63 and 64 extend from inner (or root) section 65, adjacent ID platform 66, to outer (or tip) section 67, adjacent outer diameter (OD) platform 68.

Cooling holes or outlets 60 are provided along one or more surfaces of airfoil 24, for example leading or trailing edge 61 or 62, pressure (concave) or suction (convex) surface 63 or 64, or a combination thereof. Cooling holes or passages 60 may also be provided on the endwall surfaces of airfoil 24, for example along ID platform 66 and OD platform 68.

Rotor airfoils 22 (FIG. 2A) and stator airfoils 24 (FIG. 2B) are formed of high strength, heat resistant materials such as high temperature alloys and superalloys, and are provided with thermal and erosion-resistant coatings. Airfoils 22 and 24 are also provided with internal cooling passages and cooling holes 60 to reduce thermal fatigue and wear, and to prevent melting when exposed to hot gas flow in the higher temperature regions of a gas turbine engine or other turbomachine. Cooling holes 60 deliver cooling fluid (e.g., steam or air from a compressor) through the outer walls and platform structures of airfoils 22 and 24, creating a thin layer (or film) of cooling fluid to protect the outer (gas path) surfaces from high temperature flow.

While surface cooling extends service life and increases reliability, injecting cooling fluid into the gas path also reduces engine efficiency, and the cost in efficiency increases with the required cooling flow. Cooling holes 60 are thus provided with improved metering and inlet geometry to reduce jets and blow off, and improved diffusion and exit geometry to reduce flow separation and corner effects. Cooling holes 60 reduce flow requirements and improve the spread of cooling fluid across the hot surfaces of airfoils 22 and 24, and other gas turbine engine components, so that less flow is needed for cooling and efficiency is maintained or increased.

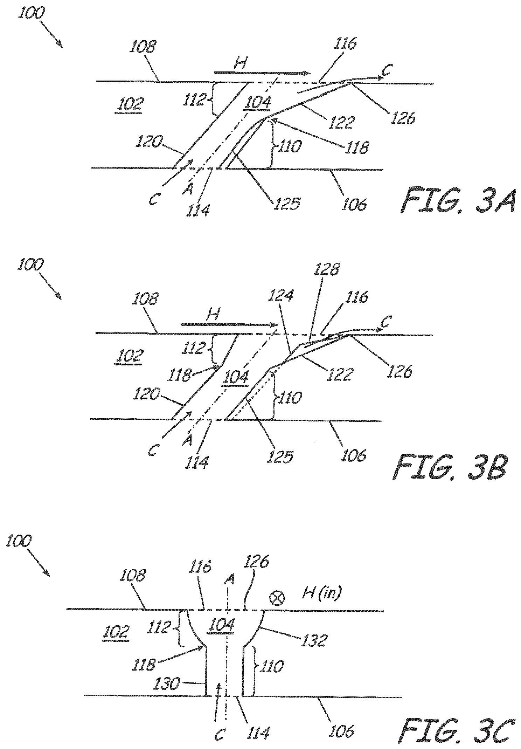

FIG. 3A is a cross-sectional view of gas turbine engine component (turbine or turbomachinery component) 100 with gas path wall 102, taken in a longitudinal direction and that carries a cool first surface 106 and an opposite, hot, second surface 108. Cooling hole 104 extends through gas path wall 102 from first surface 106 to second surface 108 to form cooling hole 60 in the, for example outer wall of an airfoil, casing, combustor liner, exhaust nozzle or other gas turbine engine component, as described above.

Gas path wall 102 of component 100 is exposed to cooling fluid on first surface 106, with longitudinal hot gas or working fluid flow H along second surface 108. In some components, for example airfoils, first surface 106 is an inner surface (or inner wall) and second surface 108 is an outer surface (or outer wall). In other components, for example combustor liners and exhaust nozzles, first surface 106 is an outer surface (or outer wall), and second surface 108 is an inner surface (or inner wall). More generally, the terms inner and outer are merely representative, and may be interchanged.

Cooling hole 104 delivers cooling fluid C from first surface 106 of wall 102 to second surface 108, for example to provide diffusive flow and film cooling. Cooling hole 104 is also inclined along axis A in a downstream direction, in order to improve cooling fluid coverage over second surface 108, with less separation and reduced flow mixing.

Cooling hole 104 includes metering section 110 and diffusing section 112, and extends along axis A from metering section 110 to diffusing section 112. Metering section 110 has inlet 114 at first surface 106 of gas path wall 102, and diffusing section 112 has outlet 116 at second surface 108 of gas path wall 102. Outlet 116 defines a perimeter of diffusing section 112 at an intersection of diffusing section 112 and second surface 108. Surfaces 120, 122, 130, and 132 of cooling hole 104 define cooling hole 104 between inlet 114 and outlet 116.

Transition 118 is defined in the region between metering section 110 and diffusing section 112, where cooling hole 104 becomes divergent (increasing flow area), and where the cooling fluid flow becomes diffusive. Transition 118 may be relatively abrupt, or may encompass an extended portion of cooling hole 104, for example in a flow transition region between metering section 110 and diffusing section 112, or over a region of overlap between metering section 110 and diffusing section 112.

As shown in FIG. 3A, metering section 110 of cooling hole 104 has substantially constant or decreasing cross-sectional area in the longitudinal direction, with upstream and downstream surfaces 120 and 122 converging or extending generally parallel to one another along axis A. This maintains or decreases the longitudinal dimension (along the direction of hot gas flow H) of cooling hole 104, from inlet 114 through metering section 110 to transition 118, in order to regulate the cooling fluid flow through inlet 114. Though surfaces 120 and 122 are represented in the cross-sectional view of FIG. 3A with a line, they can be curved as described further below. In the illustrated embodiment, surfaces 120 and 122 are angled with respect to both first surface 106 and second surface 108.

Cusp 125 extends longitudinally along metering section 110, from inlet 114 toward transition 118. Cusp 125 projects laterally outward (toward axis A) from downstream surface 122 of cooling hole 104, discouraging lateral flow components to reduce swirl. Cusp 125 also provides metering capability, as described below.

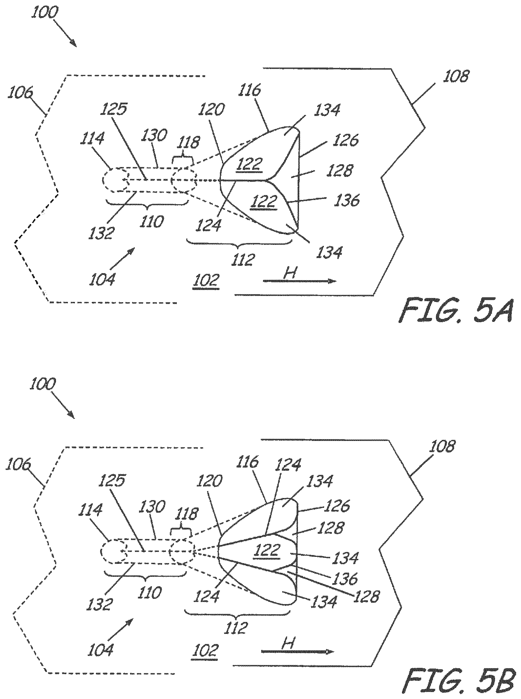

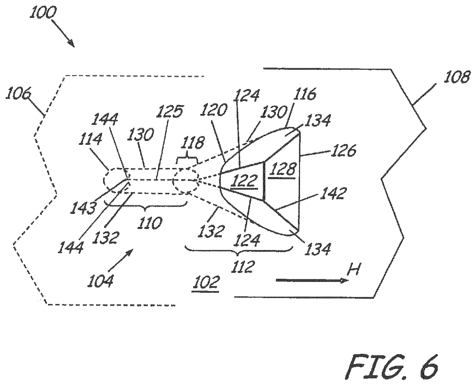

Diffusing section 112 of cooling hole 104 diverges between transition 118 and outlet 116. That is, upstream and downstream surfaces 120 and 122 diverge from one another and away from axis A in the longitudinal direction, in the region from transition 118 through diffusing section 112 to outlet 116. This increases the cross sectional flow area of diffusing section 112, in order to provide diffusive flow between transition 118 and outlet 116. In the embodiment illustrated in FIG. 3A, diffusing section 112 includes a single lobe 134. Lobe 134 is a surface of wall 102 which defines the void of cooling hole 104 at diffusing section 112. In alternative embodiments, such as FIGS. 5A, 5B, and 6, multiple lobes 134 can be included. In those embodiments, the multiple lobes 134 are surfaces of wall 102 which define distinct channel-like portions of the void of cooling hole 104 at diffusing section 112.

FIG. 3B is an alternate longitudinal cross-sectional view of gas turbine engine component 100 with gas path wall 102, showing cooling hole 104 in a lobed configuration. In this design, one or more longitudinal ridges 124 extend along downstream surface 122 of cooling hole 104, from transition 118 toward outlet 116.

Longitudinal ridge 124 projects out (toward axis A) from downstream surface 122 of cooling hole 104, discouraging vortex flow and dividing cooling hole 104 into lobes, e.g., in diffusing section 112, in order to reduce swirl and losses at outlet 116. In some designs, diffusing section 112 can include transition region 128. Transition region 128 can extend from longitudinal ridge 124 to trailing edge 126 of outlet 116, in order to discourage detachment and improve flow uniformity along second surface 108 of gas path wall 102, downstream of cooling hole 104 at outlet 116 (see, e.g., FIGS. 5A, 5B, 6). Transition region 128 can be flat or planar. Alternatively, transition region 128 can be non-flat and non-planar, such as curved (e.g. convex) longitudinally and/or laterally to encourage flow attachment.

FIG. 3C is a transverse cross sectional view of gas path wall 102, taken along axis A and looking in a downstream direction, in a plane perpendicular or transverse to the longitudinal cross sections of FIGS. 3A and 3B. In this downstream view, hot gas flow H is directed into the page, and lateral side surfaces 130 and 132 are separated in the transverse direction across axis A, perpendicular to hot gas flow H.

As shown in the FIG. 3C, metering section 110 of cooling hole 104 has substantially constant or decreasing cross sectional flow area. Opposing side surfaces 130 and 132 converge or extend generally parallel to one another along axis A in this region, from inlet 114 to transition 118. Thus, metering section 110 acts to restrict or meter cooling fluid flow from inlet 114 through transition 118, improving efficiency by regulating the amount of cooling fluid delivered to diffusing section 112.

In diffusing section 112, side surfaces 130 and 132 diverge laterally from one another (and from axis A), in the region from transition 118 to outlet 116. Thus, diffusing section 112 is divergent in both the longitudinal direction of FIG. 3A, and in the transverse direction of FIG. 3C. This improves diffusive flow between transition 118 and outlet 116, decreasing flow separation at trailing edge 126 and improving cooling performance along second surface 108 of gas path wall 102. In the illustrated embodiment, side surfaces 130 and 132 are substantially perpendicular with respect to first surface 106 at their respective intersections with first surface 106 and are angled with respect to second surface 108 at their respective intersections with second surface 108.

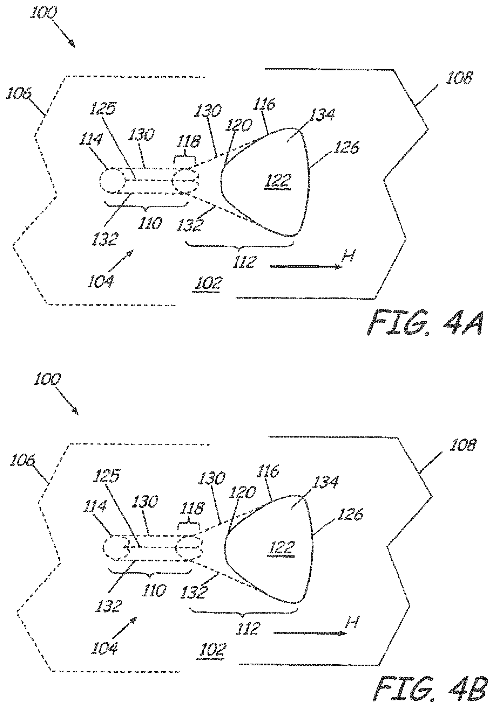

FIG. 4A is a schematic view of gas path wall 102, illustrating the cusped geometry of cooling hole 104 in metering section 110. This is a downward or inward view, looking down on second surface 108 of gas path wall 102, and along cooling hole 104 from outlet 116 toward transition 118 and inlet 114. Cusp 125 is presented at the downstream perimeter of transition 118, extending along metering section 110 of cooling hole 104 from transition 118 toward inlet 114. Transition 118 has a substantially curved shape that comes to an inwardly-projecting point at cusp 125. Transition 118 can be described as approximately oval shaped, except that cusp 125 creates a pointed projection at the downstream perimeter of inlet 114. Similarly, metering section 110 is approximately cylindroid-shaped (e.g. an elliptic cylinder), except that cusp 125 creates an inward-projecting ridge at a downstream side of metering section 110.

Second surface 108 of gas path wall 102 is exposed to hot gas flow H in a longitudinal and downstream direction, from left to right in FIG. 4A. Cooling hole 104 extends down through gas path wall 102, from outlet 116 at second surface 108 (solid lines) through transition 118 to inlet 114 at first surface 106 (dashed lines). Conversely, metering section 110 of cooling hole 104 extends upward from inlet 114 to transition 118, and diffusing section 112 extends upward from transition 118 to outlet 116.

In the particular configuration of FIG. 4A, cusp 125 extends from transition 118 to a termination point at inlet 114. The size, length and other geometric properties of cusp 125 are selected to discourage swirl (vortex) flow in cooling hole 104, for example by introducing a canceling vortex pair into the cooling fluid to weaken kidney-shaped vortices formed by crossflow in metering section 110. Cusp 125 may also be sized to increase or decrease the cooling flow rate through inlet 114, in order to improve flow metering for better coverage and cooling efficiency along second surface 108 of gas path wall 102.

Diffusing section 112 of cooling hole 104 diverges (widens) in both the longitudinal and lateral directions from transition 118 to outlet 116. This configuration promotes diffusive flow through cooling hole 104, from transition 118 through diffusing section 112 to outlet 116, for more uniform coverage with less detachment along second surface 108 of gas path wall 102.

The configuration of outlet 116 is also selected to improve cooling performance. As shown in FIG. 4A, for example, outlet 116 is formed as a delta, with arcuate upstream surface 120 extending toward substantially linear trailing edge 126, transverse or perpendicular to hot gas flow H, in order to reduce separation along second surface 108 of gas path wall 102. Cusp 125 terminates at transition 118, with cusp 125 tapering as it extends from transition 118 to inlet 114. In the illustrated embodiment, diffusing section 112 is defined as a single undivided lobe between transition 118 and outlet 116 with a substantially straight trailing edge 126. Alternatively, trailing edge 126 can be convex (see FIG. 4B).

FIG. 4B is a schematic view of gas path wall 102, illustrating an alternate cusped geometry for cooling hole 104. In this configuration, cusp 125 extends from inlet 114 through metering section 110 to transition 118 without substantially tapering as in FIG. 4A. Thus, both inlet 114 and transition 118 have cusped configurations, as defined by a cross section taken perpendicular to the axis of cooling hole 104 (see, e.g., FIG. 3B). Outlet 116 has a delta geometry, as described above, with arcuate upstream surface 120 extending to convex trailing edge 126.

The geometries of longitudinal ridge 124 and cusp 125 can vary. For example, one or both of ridge 124 and cusp 125 may be formed as long, narrow features extending along the wall of cooling hole 104, where two sloping sides of lobes 134 meet, or as a narrow raised band or rib structure along (any) surface 120, 122, 130 or 132 of cooling hole 104. Ridge 124 and cusp 125 may also be either substantially pointed or rounded where two arcuate lobes 134 meet, or where the direction of curvature reverses along a wall of cooling hole 104. Ridge 124 and cusp 125 may also be formed as arched or cone-shape features extending along the boundary of two adjacent lobes 134.

FIG. 5A is a schematic view of gas path wall 102, illustrating a lobed configuration for cooling hole 104 in diffusing section 112. As shown in FIG. 5A, longitudinal ridge 124 extends along cooling hole 104 between transition 118 and outlet 116, dividing cooling hole 104 into lobes 134 along diffusing section 112. Thus, lobes 134 define distinct channel-like portions of the void of cooling hole 104 at diffusing section 112.

Lobes 134 may have arcuate or curved surfaces along downstream surface 122 of diffusing section 112, forming longitudinal ridge 124 as a cusped ridge or rib structure, similar to cusp 125 as described above. As shown in FIG. 5A, moreover, longitudinal ridge 124 and cusp 125 may be co-formed, formed congruently or formed as extensions of one another, with longitudinal ridge 124 and cusp 125 having similar geometry along downstream surface 122 of cooling hole 104. Alternatively, longitudinal ridge 124 may extend along cooling hole 104 independently of cusp 125, for example from an oval or circular transition 118.

Transition region 128 extends laterally between arcuate extensions 136 of longitudinal ridges 124, where arcuate extensions 136 are defined along the boundaries with adjacent lobes 134. As shown in FIG. 5A, for example, longitudinal ridge 124 splits or bifurcates into two arcuate extensions 136, which extend longitudinally and transversely along diffusing section 112 to trailing edge 126 of outlet 116. In this particular configuration, cooling hole 104 has a single flat or planar transition region 128, extending along substantially the entire length of trailing edge 126 of outlet 116. Alternatively, transition region 128 can be non-flat and non-planar, such as curved (e.g. convex) longitudinally and/or laterally.

FIG. 5B is a schematic view of gas path wall 102, illustrating a three lobe configuration for cooling hole 104 in diffusing section 112. In this configuration, two longitudinal ridges 124 extend from transition 118 toward outlet 116, dividing cooling hole 104 into three lobes 134.

Two transition regions 128 extend from longitudinal ridges 124 to trailing edge 126 of outlet 116, between adjacent lobes 134. The mutual boundaries of transition regions 128 and adjacent lobes 134 are defined along arcuate extensions 136, as described above. Transition regions 128 extend across substantially all of trailing edge 126, eliminating cusps and other irregularities to provide more uniform flow coverage and better cooling performance along second surface 108 of gas path wall 102, downstream of outlet 116.

FIG. 6 is a schematic view of gas turbine engine component 100 with gas path wall 102, illustrating a "flushed" ridge configuration for cooling hole 104. In this design, longitudinal ridges 124 extend from transition 118 toward outlet 116, dividing diffusing section 112 of cooling hole 104 into two lobes. However, longitudinal ridge 124 is smoothed out and terminates at transition region 128, as bounded between intersections 142 with adjacent outer lobes 134.

Unlike arcuate extensions 136 of longitudinal ridges 124, intersections 142 do not extend above downstream surface 122 toward axis A of cooling hole 104. Instead, transition region 128 is defined along downstream surface 122, and adjacent lobes 134 curve up from intersections 142 toward second (upper) surface 108 of gas path wall 102. Transition region 128 extends across substantially all of trailing edge 126, eliminating cusps and other irregularities for more uniform flow.

The overall geometry of cooling hole 104 thus varies, as described above, and as shown in the figures. The design of inlet 114 and outlet 116 may also vary, including various circular, oblate, oval, trapezoidal, triangular, cusped and delta shaped profiles with arcuate or piecewise linear upstream surfaces 120 and straight or convex trailing edges 126. The configuration of cooling hole 104 is not limited to these particular examples, moreover, but also encompasses different combinations of the various features that are shown, including metering sections 110 with a variety of different cusps 125, transitions 118 with different circular, elliptical, oblong and cusped cross sections, and diffusing sections 112 with one, two or three lobes 134, in combination with different transition regions 128 bordered by various arcuate extensions 136 and intersections 142. Cusp 125 has point 143 which can be sharp or rounded. Sides 144 of cusp 125 can be concave, convex, or flat. Moreover, cusp 125 can be asymmetrical, with one of sides 144 being different from the other of sides 144. For example, one of sides 144 can be concave and the other of sides 144 can be flat.

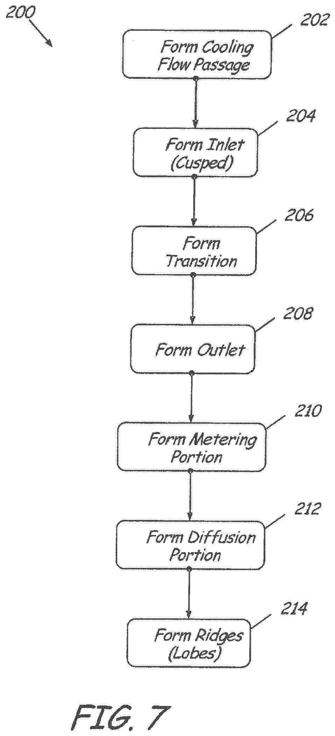

FIG. 7 is a block diagram illustrating method 200 for forming a cooling flow passage through the gas path wall of a gas turbine engine component. For example, method 200 may be used to form cooling hole 60 or cooling hole 104 in an airfoil, casing, liner, combustor, augmentor or turbine exhaust component, as described above.

Method 200 includes forming a cooling hole in a gas path wall of the component (step 202), for example by forming an inlet (step 204), forming a transition (step 206) and forming an outlet (step 208). Method 200 may also include forming a metering section (step 210) extending from the inlet to the transition, forming a diffusing section (step 212) extending from the transition to the outlet, and forming ridges to divide the diffusing section into lobes (step 214).

Forming an inlet (step 204) may include forming a cusp on the inlet, where the cusp extends along the metering section from the inlet toward the transition. The cusp may terminate at the transition, or extend into the diffusing section, for example extending congruently with a longitudinal ridge.

Forming the diffusing section (step 212) may include forming one or more ridges and lobes (step 214). The lobes are defined by the longitudinal ridge, for example extending from the transition toward the outlet. Where a cusp extends to the transition, the longitudinal ridge may be formed as an extension of the cusp, or the cusp may be formed as an extension of the longitudinal ridge.

The gas turbine engine components, gas path walls and cooling holes described herein can thus be manufactured using one or more of a variety of different processes. These techniques provide each cooling hole with its own particular configuration and features, including, but not limited to, inlet, metering, transition, diffusion, outlet, upstream surface, downstream surface, lateral surface, longitudinal, lobe and downstream edge features, as described above. In some cases, multiple techniques can be combined to improve overall cooling performance or reproducibility, or to reduce manufacturing costs.

Suitable manufacturing techniques for forming the cooling configurations described here include, but are not limited to, electrical discharge machining (EDM), laser drilling, laser machining, electrical chemical machining (ECM), water jet machining, casting, conventional machining and combinations thereof. Electrical discharge machining includes both machining using a shaped electrode as well as multiple pass methods using a hollow spindle or similar electrode component. Laser machining methods include, but are not limited to, material removal by ablation, trepanning and percussion laser machining. Conventional machining methods include, but are not limited to, milling, drilling and grinding.

The gas flow path walls and outer surfaces of some gas turbine engine components include one or more coatings, such as bond coats, thermal barrier coatings, abrasive coatings, abradable coatings and erosion or erosion-resistant coatings. For components having a coating, the inlet, metering section, transition, diffusing section and outlet cooling features may be formed prior to a coating application, after a first coating (e.g., a bond coat) is applied, or after a second or third (e.g., interlayer) coating process, or a final coating (e.g., environmental or thermal barrier) process. Depending on component type, cooling hole or passage location, repair requirements and other considerations, the diffusing section and outlet features may be located within a wall or substrate, within a thermal barrier coating or other coating layer applied to a wall or substrate, or combinations thereof. The cooling geometry and other features may remain as described above, regardless of position relative to the wall and coating materials or airfoil materials.

In addition, the order in which cooling features are formed and coatings are applied may affect selection of manufacturing techniques, including techniques used in forming the inlet, metering section, transition, outlet, diffusing section and other cooling features. For example, when a thermal barrier coat or other coating is applied to the second surface of a gas path wall before the cooling hole or passage is produced, laser ablation or laser drilling may be used. Alternatively, either laser drilling or water jet machining may be used on a surface without a thermal barrier coat. Additionally, different machining methods may be more or less suitable for forming different features of the cooling hole, for example different laser and other machining techniques may be used for forming the outlet and diffusion features, and for forming the transition, metering and inlet features.

### Discussion of Possible Embodiments

The following are non-exclusive descriptions of possible embodiments of the present invention.

A component for a gas turbine engine can include a wall and a cooling hole. The wall can have a first surface and a second surface. The second surface can be exposed to hot gas flow. The cooling hole can extend through the wall. The cooling hole can include a metering section extending from an inlet in the first surface of the wall to a transition, a diffusing section extending from the transition to an outlet in the second surface of the wall, a cusp on the transition, and a first longitudinal ridge extending along the diffusing section between the transition and the outlet. The first longitudinal ridge can divide the diffusing section into first and second lobes.

The component of the preceding paragraph can optionally include, additionally and/or alternatively any, one or more of the following features, configurations and/or additional components:
the cooling hole can extend through the wall along an axis, and the first longitudinal ridge can extend away from a downstream surface of the cooling hole toward the axis;
the cusp can extend from the transition along the metering section of the cooling hole toward the inlet;
the cusp can extend to the transition and the longitudinal ridge can extend from the cusp at the transition along the diffusing section toward the outlet;
a third lobe can be positioned between the first and second lobes, the first longitudinal ridge can divide the first lobe from the third lobe; and a second longitudinal ridge can divide the second lobe from the third lobe;
the third lobe can terminate in a transition region extending from the first and second longitudinal ridges to a trailing edge of the outlet;
a first transition region can extend from the first longitudinal ridge to a trailing edge of the outlet and a second transition region can extend from the second longitudinal ridge to the trailing edge of the outlet;
the outlet can include a trailing edge that is substantially straight along the second surface of the wall;
the outlet can include a trailing edge that is substantially convex;
the cusp can taper as it extends from the transition to the inlet; and/or
the wall can form one of a pressure surface, a suction surface or a platform surface of an airfoil.

A gas turbine engine component can include a flow path wall having a first surface and a second surface that is exposed to working fluid flow. An inlet can be formed in the first surface of the flow path wall. A metering section can extend from the inlet to a transition. A diffusing section can extend from the transition to an outlet in the second surface. A cusp can be formed on the transition. A longitudinal ridge can extend along the diffusing section from the transition toward the outlet. The longitudinal ridge can separate the diffusing section into first and second lobes.

The gas turbine engine component of the preceding paragraph can optionally include, additionally and/or alternatively any, one or more of the following features, configurations and/or additional components:
the cusp can extend from the transition along the metering section toward the inlet;
the first longitudinal ridge can be a single longitudinal ridge extending from the cusp at the transition and the first longitudinal ridge extend toward the outlet to divide the diffusing section into the first and second lobes;
a third lobe can be positioned between the first and second lobes, the first longitudinal ridge can divide the first lobe from the third lobe, and a second longitudinal ridge can divide the second lobe from the third lobe;
the third lobe can terminate in a transition region extending from the first and second longitudinal ridges to a trailing edge of the outlet;
the cusp can taper as it extends from the transition to the inlet;
the outlet can include a trailing edge that is substantially straight along the second surface of the wall;
the outlet can include a trailing edge that is substantially convex; and/or
a turbofan engine can include the gas turbine engine component.

## Claims

1. A component for a gas turbine engine (10), the component comprising:
a wall (102) having a first surface (106) and a second surface (108), wherein the second surface (108) is exposed to hot gas flow; and
a cooling hole (104) extending through the wall from an inlet in the first surface of the wall to an outlet in the second surface of the wall, the cooling hole comprising:
a metering section (110) extending from the inlet (114) to a transition (118);
a diffusing section (112) extending from the transition to the outlet, the diffusing section (112) comprising:
a lobe (134) diverging longitudinally and laterally from the transition and having a trailing edge (126); and
a cusp (125) extending from the transition along the metering section of the cooling hole toward the inlet (114).

2. The component of claim 1, further comprising:
a first longitudinal ridge (124) extending along the diffusion section (112) between the transition and the outlet (116) and dividing the lobe (125) into a first lobe and a second lobe.

3. The component of claim 2, further comprising:
a first arcuate extension (136) extending between the first longitudinal ridge and the trailing edge (126), the first arcuate section (136) at least partially defining the first lobe; and
a second arcuate extension (136) extending between the first longitudinal ridge (124) and the trailing edge (126), the second arcuate extension at least partially defining the second lobe.

4. The component of claim 3, further comprising: a first transition region (128) extending laterally between the first arcuate extension (136) and the second arcuate extension (136), and from the first longitudinal ridge (124) to the trailing edge (126).

5. The component of claim 2, wherein the cooling hole (104) extends through the wall along an axis, and wherein the first longitudinal ridge extends away from a downstream surface (122) of the cooling hole (104) toward the axis.

6. The component of claim 2, further comprising:
a third lobe disposed between the first lobe and the second lobe; and
a second longitudinal ridge (124) extending along the diffusion section between the transition and the outlet (116);
wherein the first longitudinal ridge (124) is disposed between and divides the first lobe and the third lobe, and the second longitudinal ridge is disposed between and divides the second lobe and the third lobe.

7. The component of claim 6, further comprising:
a plurality of arcuate extensions (136) extending between the first longitudinal ridge (124) and the trailing edge (126) and the second longitudinal ridge and the trailing edge (126).

8. The component of claim 7, further comprising:
a first transition region (128) extending laterally between the first lobe and the third lobe and from the first longitudinal ridge (124) to the trailing edge (126); and
a second transition region (128) extending laterally between the second lobe and the third lobe and from the second longitudinal ridge (124) to the trailing edge (126).

9. The component of claim 2, further comprising:
a second longitudinal ridge (124) extending along the diffusion section (112) between the transition and the outlet (116);
a transition region extending laterally between the first lobe and the second lobe and along the trailing edge (126);
wherein the first longitudinal ridge terminates at an intersection between the first lobe and the transition region (128); and
wherein the second longitudinal ridge (124) terminates at an intersection between the second lobe and the transition region (128).

10. The component of claim 1, wherein the outlet (116) has a delta geometry including an arcuate upstream surface.

11. The component of claim 10, wherein the trailing edge (128) is substantially straight and extends longitudinally to the hot gas flow.

12. The component of claim 1, wherein the cusp (125) tapers as the cusp extends from the transition to the inlet (114).

13. The component of any preceding claim, wherein the wall forms one of a pressure surface, a suction surface, or a platform surface of an airfoil.

14. The component of any preceding claim, wherein the wall is a flow path wall and the hot gas flow is a working fluid flow.

15. A turbofan engine comprising the component of claim 14.
